# EUROPÄISCHE PATENTSCHRIFT

(11) **EP 1 318 028 B1**
(45) Veröffentlichungstag und Bekanntmachung des Hinweises auf die Patenterteilung: **09.08.2006**
(21) Anmeldenummer: 02026619.3
(22) Anmeldetag: 29.11.2002
(51) Int. Cl.: B60B 33/00, B62B 5/00

(54) **Rollenvorrichtung für einen Transportwagen**
Roller device for trolley
Dispositif à rouleaux pour chariot

(30) Priorität: 05.12.2001 DE 10159672
(43) Veröffentlichungstag der Anmeldung: 11.06.2003
(73) Patentinhaber: Schwarzwälder-Service Industrie- u. Gebäudereinigungsges. mbH & Co., 78040 Villingen-Schwenningen (DE)
(72) Erfinder: Simon, Jürgen, 78465 Konstanz-Wallhausen (DE)
(74) Vertreter: Patentanwälte Westphal, Mussgnug & Partner

(56) Entgegenhaltungen:
- US-A- 4 467 496
- US-A- 4 494 464
- US-A- 4 534 433
- US-A- 5 371 922

## Beschreibung

Die vorliegende Erfindung betrifft eine Rollenvorrichtung für einen Transportwagen gemäß Oberbegriff des Anspruchs 1. Eine derartige Rollenvorrichtung ist beispielsweise aus der US 5,371,922 bekannt, von der die Erfindung ausgeht.

Derartige Rollenvorrichtungen sind von zahlreichen Transportwagen aus dem Alltag bekannt. Zu den in Frage kommenden Transportwagen gehören beispielsweise Einkaufswagen, die in Supermärkten für Kunden bereitgestellt werden. Auch Gepäckwagen, die beispielsweise an Flughäfen und Bahnhöfen bereitstehen, damit Passagiere mit ihrer Hilfe Koffer, Taschen und dergleichen nicht tragen müssen, sondern bequem über längere Entfernungen vor sich herschieben oder hinter sich herziehen können, stellen derartige Transportwagen dar. Als weiteres, besonders wichtiges Beispiel für solche Transportwagen sind Putzwagen zu nennen, die beispielsweise von Gebäudereinigungsdiensten verwendet und dort als Reinigungsfahreimer bezeichnet werden, und auf denen neben üblichem Reinigungsmaterial insbesondere auch mit Wasser gefüllte schwere Eimer bequem durch ein Gebäude geschoben werden können, oder auch kleine Wagen, auf denen nur ein Putzeimer Platz findet, um geschoben zu werden. Weitere wichtige Einsatzgebiete sind Krankentransportbetten und fahrbare Krankenliegen zu nennen.

All diesen Transportwagen ist ein Rahmen, in der Regel aus Metall, gemeinsam, in dessen unterem Bereich mehrere Rollenvorrichtungen angebracht sind. Meist sind vier Rollenvorrichtungen vorgesehen, nämlich jeweils eine an jeder unteren Ecke des Wagenrahmens; bei Gepäckwagen werden häufig nur drei Rollenvorrichtungen eingesetzt mit einer zentralen vorderen Rolle und zwei hinteren Rollen an den beiden hinteren unteren Ecken des in der Regel rechteckförmigen Gepäckwagenrahmens.

Grundsätzlich werden die in derartigen Rollenvorrichtungen eingesetzten Stützrollen, die das gesamte auf dem jeweiligen Transportwagen lastende Gewicht abstützen, in Bockrollen und Lenkrollen unterschieden. Von einer Bockrolle spricht man, wenn die Stützrollengabel, in der die Stützrolle mittels eines Rollenlagers drehbar gelagert ist, fest am Rahmen bzw. einem mit dem Rahmen verbundenen Bauteil befestigt ist, so dass die Stützrollenachse relativ zum Rahmen des Transportwagens immer die gleiche Orientierung einnimmt, nämlich orthogonal zur Längsrichtung beispielsweise des Einkaufswagens liegt. Bei einer Lenkrolle hingegen ist die Rollengabel am Rahmen derart schwenkbar gelagert, dass die Stützrolle um eine vertikale Achse relativ zum Rahmen geschwenkt werden kann, was die Kurvenfahrt mit dem jeweiligen Transportwagen erleichtert.

Bei all diesen Rollenvorrichtungen des Standes der Technik, unabhängig von der Art des Transportwagens, bei der sie eingesetzt werden, tauchen häufig Probleme auf, wenn der Boden, über den der Transportwagen geschoben oder gezogen wird, Unregelmäßigkeiten oder Unebenheiten aufweist. Insbesondere beim Überfahren von Fugen, wie sie beispielsweise bei Aufzügen zwischen einer Aufzugskabine und einer Schachtwand auftreten, tauchen die vergleichsweise kleinen Stützrollen unabhängig davon, ob sie als Bockrollen oder als Lenkrollen ausgelegt sind, in die Fuge ein, wodurch sich der jeweilige Transportwagen in diesem Bereich absenkt und im Extremfall die Gefahr besteht, hängen zu bleiben. Bei einem Putzwagen kann dies regelmäßig zum Überschwappen des Putzwassers aus dem Eimer führen, der mit Hilfe des Wagens transportiert wird. Auch Einkaufswagen und Gepäckwagen senken sich beim Überfahren einer Fuge im Bereich der in die Fuge eintauchenden Stützrolle ab, was zum Umfallen und ggf. zur Beschädigung von Waren im Einkaufswagen bzw. von Gepäckstücken auf dem Gepäckwagen führen kann. Darüber hinaus kann es bei schwer beladenen Wägen und tiefen Fugen beschwerlich sein, den Wagen nach einem Eintauchen in eine Fuge und einem damit in Zusammenhang stehenden Abbremsen wieder in Bewegung zu setzen.

Ähnliche Probleme treten bei noppenartigen Fußböden auf, wie sie im Industriebereich häufig anzutreffen sind. Beim Überfahren derartiger Böden kommt es zu einem Rattern beispielsweise des Putzwagens und zu unerwünschten Wellenbewegungen im Putzwassereimer, die ebenfalls wieder zum teilweisen Überschwappen führen können.

Besonders gravierend ist dieses Problem beim Transport von Patienten auf den vorstehend angesprochenen Betten oder Liegen, die bei Überfahren von Fugen oder Noppenboden unerwünschten körperlichen Belastungen ausgesetzt werden.

Es ist daher Aufgabe der vorliegenden Erfindung, eine Rollenvorrichtung der eingangs genannten Art anzugeben, die beim Überfahren einer Unregelmäßigkeit im Boden, beispielsweise einer Fuge, ein örtliches Absinken des Transportwagens vermeidet.

Diese Aufgabe wird bei einer gattungsgemäßen Rollenvorrichtung dadurch gelöst, dass die Höhe des Nachlaufrollenlagers und der Durchmesser der Nachlaufrolle derart gewählt sind, dass ein unterer Bereich ihrer Lauffläche auf gleicher Höhe liegt wie ein unterer Bereich der Lauffläche der Stützrolle. Somit liegen die Laufflächen beider Rollen ständig auf dem Boden auf, beide Rollen sind also ständig im Einsatz.

Die der Stützrolle benachbarte Nachlaufrolle übernimmt die lokale Abstützung des Transportwagens, wenn die Stützrolle in den Fugenbereich gelangt ist und keinen Halt mehr bietet. Insbesondere kann die Rollenvorrichtung so ausgelegt sein, dass die Nachlaufrolle beim Vorwärts-Schieben des Transportwagens der Stützrolle unmittelbar nachläuft. In diesem Fall gelangt zuerst die Stützrolle in den Bereich einer im Boden verlaufenden Fuge, und die hinter ihr befindliche Nachlaufrolle übernimmt die lokale Abstützung des Transportwagens. Wenn der Wagen dann weitergeschoben wird, bis auch die Nachlaufrolle die Fuge erreicht hat, hat die weiter vorne befindliche Stützrolle den Fugenbereich in der Regel bereits wieder verlassen und stützt den Transportwagen lokal ab. Wenn dieser nicht vorwärts geschoben, sondern rückwärts gezogen wird, kann es auch vorkommen, dass zunächst die Nachlaufrolle die Fuge überquert, während die Stützrolle die Abstützung übernimmt, und erst anschließend die Stützrolle die Fuge überquert, während die Nachlaufrolle den Transportwagen stützt. In all diesen Fällen stellt die erfindungsgemäße Rollenvorrichtung sicher, dass wenigstens eine der beiden Rollen außerhalb des Fugenbereichs ist und den Transportwagen somit abstützen kann.

In einer besonders kompakten Ausführungsform der erfindungsgemäßen Rollenvorrichtung ist vorgesehen, dass das Nachlaufrollenlager in der Stützrollengabel gebildet ist. Die gemeinsame Lagerung beider Rollen in der gleichen Gabel, nämlich der Stützrollengabel, reduziert den Platzbedarf der Rollenvorrichtung, was nicht nur im Betrieb des Transportwagens, sondern auch beim Versand einzelner Teile der Rollenvorrichtung vorteilhaft ist. Zudem kann bei dieser Ausgestaltung die Stützrollengabel mit beiden in ihr gelagerten Rollen als ein einheitliches Bauteil ausgetauscht werden, beispielsweise um einen Transportwagen für einen Einsatz auf anderen Böden vorzubereiten.

Alternativ ist jedoch auch möglich, dass die erfindungsgemäße Rollenvorrichtung eine der Stützrollengabel benachbarte Nachlaufrollengabel umfasst, in der das Nachlaufrollenlager gebildet ist. Diese Gestaltung erweist sich besonders dann als vorteilhaft, wenn bei existierenden Transportwägen Rollenvorrichtungen erfindungsgemäß nachgerüstet werden sollen. In diesem Fall kann dann eine Nachlaufrollengabel mit in ihr gelagerter Nachlaufrolle nachträglich im Bereich der bereits vorhandenen Stützrolle montiert werden.

Die vorstehend genannten Ausführungsformen sind unabhängig davon, ob die Stützrolle, wie eingangs erläutert, eine Bockrolle oder eine Lenkrolle ist, ob sie also relativ zum Rahmen des Transportwagens feststeht oder um eine vertikale Achse schwenkbar ist. Wenn die Stützrolle eine Bockrolle ist und das Nachlaufrollenlager in der Stützrollengabel gebildet ist, so versteht es sich, dass die Nachlaufrolle relativ zum Rahmen des Transportwagens ebenfalls nicht schwenkbar ist. Wenn bei einer Bockrolle als Stützrolle eine getrennte Nachlaufrollengabel vorgesehen ist, so kann diese grundsätzlich schwenkbar an einem unteren Bereich des Rahmens angebracht sein, so dass die Nachlaufrolle eine Lenkrolle bildet. Das Kurvenfahrverhalten des Transportwagens verbessert sich hierdurch gegenüber der erstgenannten Ausführungsform, bei der beide Rollen als nicht schwenkbare Bockrollen anzusehen sind.

In einer Weiterbildung der letztgenannten Ausführungsform mit einer getrennten Nachlaufrollengabel kann jedoch vorgesehen sein, dass die Stützrolle eine Lenkrolle mit einer relativ zum Rahmen des Transportwagens schwenkbar gelagerten Stützrollengabel ist, und dass die Nachlaufrollengabel an der Stützrollengabel befestigt ist. Diese Ausführungsform vereinigt den erfindungsgemäßen Vorteil einer ständigen Abstützung des Transportwagens durch wenigstens eine der beiden Rollen mit dem guten Kurvenfahrverhalten von Lenkrollen. Da nämlich die Nachlaufrollengabel an der Stützrollengabel befestigt ist, und diese wiederum relativ zum Rahmen schwenkbar gelagert ist, werden bei einer Kurvenfahrt die beiden "hintereinandergeschalteten" Rollen gemeinsam relativ zum Rahmen geschwenkt, so dass im Bereich der erfindungsgemäßen Rollenvorrichtung der Kurvenfahrt kein nennenswerter Widerstand entgegengesetzt wird.

In einer alternativen Ausführungsform kann jedoch vorgesehen sein, dass die Stützrolle eine Lenkrolle mit einer relativ zum Rahmen des Transportwagens schwenkbar gelagerten Stützrollengabel ist, und dass die Nachlaufrollengabel an einem relativ zum Rahmen des Transportwagens feststehenden Abschnitt der Rollenvorrichtung befestigt ist. Obwohl bei dieser Ausführungsform die Nachlaufrolle wegen der insgesamt feststehenden Nachlaufrollengabel bei Kurvenfahrt nicht schwenkbar ist, hat sich diese Ausführungsform dennoch als kurvenfreundlich erwiesen, wenn - wie im Normalfall - der Transportwagen beispielsweise derart geschoben wird, dass in Fahrtrichtung die Lenkrolle vor der Nachlaufrolle liegt. Daher empfiehlt sich diese Ausführungsform insbesondere dann, wenn bei einem bestehenden Transportwagen eine gattungsgemäße Rollenvorrichtung, bei der die Stützrolle eine Lenkrolle ist, auf einfache Weise mit einer Nachlaufrolle nachgerüstet werden soll. In diesem Fall ist nämlich die Befestigung der Nachlaufrollengabel an einem feststehenden Abschnitt der Rollenvorrichtung in der Regel problemlos möglich, wohingegen ihre Befestigung an der Stützrollengabel in der Regel eine entsprechende Vorbereitung der Stützrollengabel erfordern wird, die bei bestehenden gattungsgemäßen Rollenvorrichtungen oft nicht vorhanden ist.

Bei dieser Gestaltung der erfindungsgemäßen Rollenvorrichtung mit einer Lenkrolle als Stützrolle und einer feststehend montierten getrennten Nachlaufrollengabel kann in einer einfachen Ausführungsform zweckmäßigerweise vorgesehen sein, dass der feststehende Abschnitt der Rollenvorrichtung eine Lagerschale ist, in der die Stützrollengabel schwenkbar gelagert ist. Derartige Lagerschalen bieten nämlich üblicherweise hinreichend Angriffsfläche und sind hinreichend stabil, um an ihnen eine Nachlaufrollengabel zu befestigen.

In einer zweckmäßigen Weiterbildung der erfindungsgemäßen Rollenvorrichtung sind/ist die Stützrolle und/oder die Nachlaufrolle mit einer Feststellvorrichtung versehen. Derartige Feststellvorrichtungen, beispielsweise Keile, die an die Lauffläche einer Rolle gedrückt werden können, sind bei derartigen Rollenvorrichtungen bekannt und verhindern ein ungewolltes "Wegrollen" des Transportwagens im Gefälle, bei einem versehentlichen Anstoßen usw. Dies ist gerade im Hinblick auf die eingangs genannten Putzwägen und die Gefahr eines Überschwappens des Putzwassers als Zusatzmaßnahme bei erfindungsgemäßen Rollenvorrichtungen empfehlenswert.

Die Erfindung betrifft ferner einen Transportwagen, insbesondere Putzwagen, Einkaufswagen oder Gepäckwagen, der mit wenigstens einer erfindungsgemäßen Rollenvorrichtung ausgestattet ist. Vorteilhafterweise wird ein derartiger Transportwagen natürlich mit mehreren erfindungsgemäßen Rollenvorrichtungen versehen sein; es ist aber beispielsweise bei Gepäckwägen, die vorne mit einer zentralen Rollenvorrichtung und hinten mit zwei an den unteren Ecken des Rahmens angebrachten Rollenvorrichtungen ausgestattet sind, grundsätzlich vorstellbar, nur die zentrale vordere Rollenvorrichtung erfindungsgemäß zu gestalten, da ein Eintauchen der einzigen vorderen Stützrolle in eine Fuge zu einer stärkeren Erschütterung des Wagens führen kann als das Eintauchen einer der beiden hinteren Stützrollen.

Die Erfindung wird im Folgenden an bevorzugten Ausführungsbeispielen anhand der Zeichnung erläutert. Es zeigt:
Fig.1: eine erste Ausführungsform der erfindungsgemäßen Rollenvorrichtung, bei der die Stützrolle und die Nachlaufrolle in der Stützrollengabel hintereinander gelagert sind;
Fig.2: die Ausführungsform gem. Fig. 1 beim Überfahren einer Fuge; und
Fig.3: eine zweite Ausführungsform der erfindungsgemäßen Rollenkvorrichtung mit einer an einer feststehenden Lagerschale befestigten Nachlaufrollengabel.

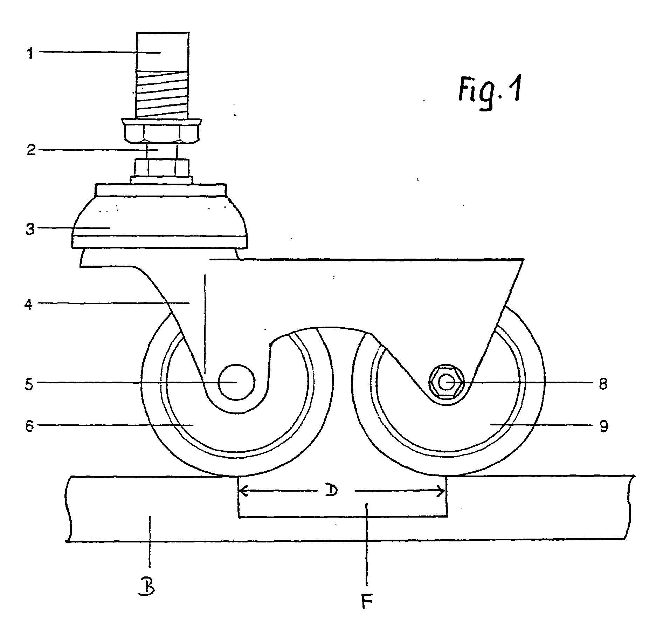

In Fig.1 ist eine erste Ausführungsform der erfindungsgemäßen Rollenvorrichtung dargestellt, bei der eine Stützrolle 6 als Lenkrolle ausgebildet ist. Hierzu ist die Stützrolle 6 mittels eines Stützrollenlagers 5 in einer Stützrollengabel 4 drehbar gelagert. Die Stützrollengabel 4 wiederum ist in einer Lagerschale 3 gelagert, die über einen Einsteckzapfen 2 und einen Gerätehalter 1 fest am nicht gezeigten Rahmen eines Transportwagens befestigt ist.

Aufgrund der Lagerung der Stützrollengabel 4 in der Lagerschale 3 kann die Stützrollengabel 4 bei einer Kurvenfahrt des Transportwagens um eine in der Zeichenebene der Fig.1 liegende, in der Praxis vertikale Schwenkachse in der Lagerschale 3 geschwenkt werden.

Während der bislang angesprochene linke Teil der Fig.1 von gattungsgemäßen Rollenvorrichtungen bekannt ist, ist nun die erfindungsgemäße Ausgestaltung im rechten Teil der Fig.1 zu erläutern: Man erkennt, dass die Stützrollengabel 4 in Fig.1 nach rechts verlängert ist, und dass eine weitere Rolle, die Nachlaufrolle 9, im rechten Bereich der Stützgabel 4 mittels eines Nachlaufrollenlagers 8 in der Stützgabel 4 gelagert ist. Die in Fig.1 dargestellte Stellung der erfindungsgemäßen Rollenvorrichtung würde beispielsweise ihrem Einsatz bei einem Einkaufswagen entsprechen, dessen vorderes Ende in Fig.1 links und dessen Griffende in Fig.1 rechts liegt, und somit bezogen auf Fig.1 von rechts nach links geschoben wird.

Es versteht sich, dass bei einer Kurvenfahrt mit der in Fig.1 dargestellten Ausführungsform der erfindungsgemäßen Rollenvorrichtung die gesamte Stützrollengabel 4 und somit beide Rollen 6, 9 geschwenkt werden.

Wie man anhand von Fig.1 sofort erkennt, weisen die beiden Rollen 6, 9 den gleichen Durchmesser auf, und ihre jeweiligen Lager 5, 8 sind in der Stützrollengabel 4 in gleicher Höhe vorgesehen, so dass auch die unteren Bereiche der Laufflächen der beiden Rollen 6, 9 auf gleicher Höhe liegen. Daher liegen beide Rollen 6, 9 auf dem Boden B auf. Die vom Transportwagen auf den Halter 1 ausgeübte Last verteilt sich somit stets auf beide Rollen 6, 9, die sich bei Bewegung des Transportwagens beide in ihren jeweiligen Lagern 5, 8 drehen.

Wie man in Fig. 1 erkennt, kann mit dieser Ausführungsform der erfindungsgemäßen Rollenvorrichtung eine Fuge F im Boden B überfahren werden, deren Breite D dem horizontalen Abstand zwischen dem Stützrollenlager 5 und dem Nachlaufrollenlager 8 entspricht, ohne die lokale Abstützung des Transportwagens zu verlieren, da bis zu dieser Fugenbreite D stets wenigstens eine der beiden Rollen 6, 9 vollständig auf dem Boden B aufliegt. Es versteht sich daher, dass bei der Herstellung der Stützrollengabel 4 der Abstand zwischen den beiden Lagern 5, 8 als Funktion des beabsichtigten Einsatzgebiets der erfindungsgemäßen Rollenvorrichtung gewählt werden kann, insbesondere als Funktion der zu erwartenden Fugenbreiten D.

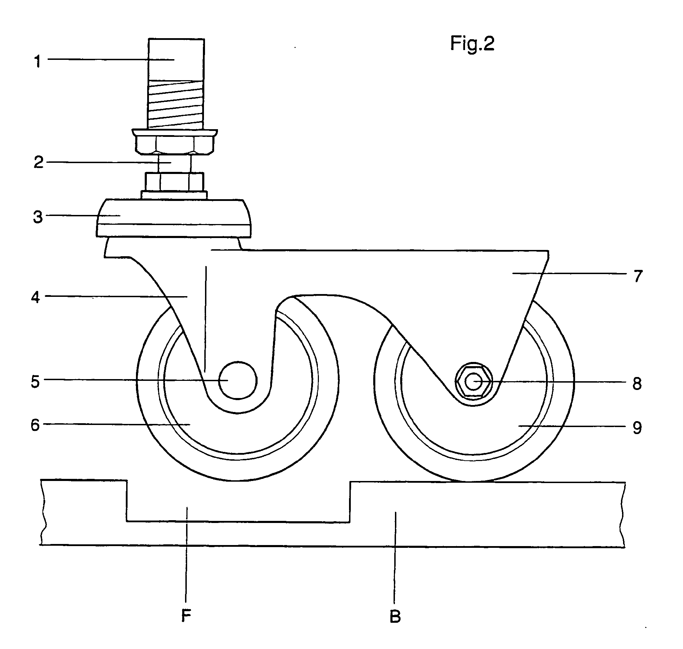

Fig. 2 zeigt eine gegenüber Fig. 1 abweichende Position der Rollenvorrichtung im Bezug auf die zu überfahrende Fuge F. Es ist deutlich zu erkennen, dass die Stützrolle 6 nicht in die Fuge F eintaucht, da die Nachlaufrolle 9 vollständig die Abstützung auf dem Boden B übernommen hat.

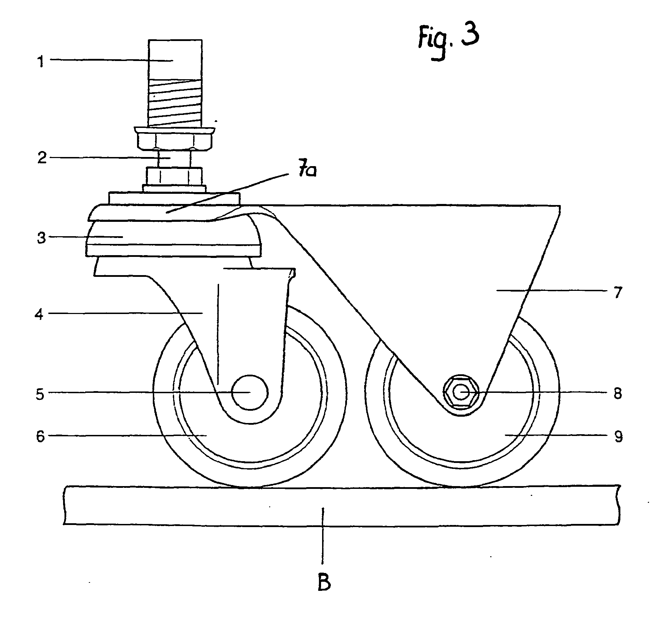

Fig.3 zeigt eine weitere Ausführungsform der erfindungsgemäßen Rollenvorrichtung. Auch bei ihr ist die Stützrolle 6 als Lenkrolle ausgebildet. Im Gegensatz zu der ersten Ausführungsform der Figuren 1 und 2 ist jedoch bei dieser Ausführungsform die Nachlaufrolle 9 als Bockrolle gebildet. Die Nachlaufrolle 9 ist nämlich mittels eines Nachlaufrollenlagers 8 in einer Nachlaufrollengabel 7 drehbar gelagert, welche an einem feststehenden Abschnitt der Rollenvorrichtung befestigt ist. Man erkennt in Fig.3, dass die Nachlaufrollengabel 7 in ihrem in Fig.3 linken Bereich einen vorstehenden Befestigungsabschnitt 7a aufweist, der mittels Verschraubung am oberen Bereich der Lagerschale 3 befestigt ist. Somit kann die Nachlaufrolle 9 relativ zum Rahmen des Transportwagens nicht geschwenkt werden, im Gegensatz zu der in Fahrtrichtung vor ihr liegenden Stützrolle 6. In der Praxis hat es sich gezeigt, dass diese Anordnung einer in Fahrtrichtung vorderen Lenkrolle und einer hinteren Bockrolle dennoch ein gutes Kurvenfahrverhalten des Transportwagens ermöglicht. Somit ergibt sich auch aus der Ausführungsform gemäß Fig.3 eine geeignete Möglichkeit, eine bestehende gattungsgemäße Rollenvorrichtung zu einer erfindungsgemäßen Rollenvorrichtung nachzurüsten, ohne dass hierfür bereits Vorkehrungen an der Stützrollengabel getroffen sein müssen. Die Ausführungsform gemäß Fig.3 kann nämlich problemlos dadurch erreicht werden, dass bei einer bestehenden gattungsgemäßen Rollenvorrichtung durch Lösen einiger Schrauben die Lagerschale 3 mit der in ihr gelagerten Stützrollengabel 4 ausgebaut wird, dann der Befestigungsabschnitt 7a auf die untere Verlängerung des Einsteckzapfens 2 gefädelt wird, und anschließend auch die Lagerschale 3 wieder aufgefädelt und festgeschraubt wird.

In all ihren Ausführungsformen stellt die erfindungsgemäße Rollenvorrichtung stets eine gute Abstützung des Transportwagens durch wenigstens eine der beiden Rollen 6, 9 sicher, wenn der horizontale Abstand zwischen dem Stützrollenlager 5 und dem Nachlaufrollenlager 8 hinreichend groß gewählt ist, d.h. größer oder gleich der maximal zu erwartenden Fugenbreite D. Hierbei ist die erfindungsgemäße Rollenvorrichtung nicht auf die in den Figuren 1 bis 3 schematisch gezeigten Ausführungsformen beschränkt. Selbstverständlich könnte in allen exemplarisch erläuterten Ausführungsformen beispielsweise anstelle einer Lenkrolle auch eine Bockrolle als Stützrolle 6 vorgesehen sein. Auch in diesem Fall kann problemlos die Nachlaufrolle 9 in der Stützrollengabel 4 gelagert sein (entsprechend Fig.1) bzw. kann die Nachlaufrollengabel 7 an der Stützrollengabel 4 befestigt sein bzw. kann die Nachlaufrollengabel 7 feststehend im Bereich des Einsteckzapfens 2 befestigt sein (entsprechend Fig.3). Ferner versteht es sich, dass eine Nachlaufrolle 9 mit kleinerem Durchmesser als bei der Stützrolle 6 gewählt werden kann oder auch eine Nachlaufrolle 9 mit größerem Durchmesser einsetzbar ist, wenn in diesem Fall das Nachlaufrollenlager 8 entsprechend höhenversetzt in Bezug auf das Stützrollenlager 5, angeordnet ist.

Ferner versteht es sich, dass insbesondere dann, wenn die Stützrolle eine Bockrolle ist und die Nachlaufrolle 9 als Bockrolle befestigt ist (entsprechend Fig.3), die Nachlaufrolle 9 der Stützrolle 6 auch vorauslaufen kann, entsprechend einem Schieben eines zu Fig.3 gehörenden Transportwagens von links nach rechts.

### Bezugszeichenliste

- 1:: Gerätehalter
- 2:: Einsteckzapfen
- 3:: Lagerschale
- 4:: Stützrollengabel
- 5:: Stützrollenlager
- 6:: Stützrolle
- 7:: Nachlaufrollengabel
- 7a:: Befestigungsabschnitt
- 8:: Nachlaufrollenlager
- 9:: Nachlaufrolle
- B:: Boden
- F:: Fuge
- D:: Breite der Fuge

## Patentansprüche

1. Rollenvorrichtung für einen Transportwagen, umfassend
- einen Gerätehalter (1),
- eine Stützrollengabel (4), die über den Gerätehalter (1) an einem unteren Bereich eines Rahmens des Transportwagens befestigbar ist,
- eine Stützrolle (6), die in einem Stützrollenlager (5) in der Stützrollengabel (4) um eine im Betrieb des Transportwagens im Wesentlichen horizontale Stützrollenachse drehbar gelagert ist,
- eine der Stützrolle (6) benachbarte Nachlaufrolle (9), die in einem Nachlaufrollenlager (8) um eine im Betrieb des Transportwagens im Wesentlichen horizontale Nachlaufrollenachse drehbar gelagert ist,
wobei die Nachlaufrolle (9) auch über den Gerätehalter (1) an einem unteren Bereich eines Rahmens des Transportwagens befestigbar ist,
**dadurch gekennzeichnet, dass** die Höhe des Nachlaufrollenlagers (8) und der Durchmesser der Nachlaufrolle (9) derart gewählt sind, dass ein unterer Bereich ihrer Lauffläche auf gleicher Höhe liegt wie ein unterer Bereich der Lauffläche der Stützrolle (6).

2. Rollenvorrichtung nach Anspruch 1,
**dadurch gekennzeichnet,**
**dass** das Nachlaufrollenlager (8) in der Stützrollengabel (4) gebildet ist.

3. Rollenvorrichtung nach Anspruch 1,
**dadurch gekennzeichnet,**
**dass** sie eine der Stützrollengabel (4) benachbarte Nachlaufrollengabel (7) umfasst, in der das Nachlaufrollenlager (8) gebildet ist.

4. Rollenvorrichtung nach Anspruch 3,
**dadurch gekennzeichnet,**
**dass** die Stützrolle (6) eine Lenkrolle mit einer relativ zum Rahmen des Transportwagens schwenkbar gelagerten Stützrollengabel (4) ist, und dass die Nachlaufrollengabel (7) an der Stützrollengabel (4) befestigt ist.

5. Rollenvorrichtung nach Anspruch 3,
**dadurch gekennzeichnet,**
**dass** die Stützrolle (6) eine Lenkrolle mit einer relativ zum Rahmen des Transportwagens schwenkbar gelagerten Stützrollegabel (4) ist, und dass die Nachlaufrollengabel (7) an einem relativ zum Rahmen des Transportwagens feststehenden Abschnitt der Rollenvorrichtung befestigt ist.

6. Rollenvorrichtung nach Anspruch 5,
**dadurch gekennzeichnet,**
**dass** der feststehende Abschnitt der Rollenvorrichtung eine Lagerschale (3) ist, in der die Stützrollengabel (4) schwenkbar gelagert ist.

7. Rollenvorrichtung nach einem der vorhergehenden Ansprüche,
**dadurch gekennzeichnet,**
**dass** die Stützrolle (6) und/oder die Nachlaufrolle (9) mit einer Feststellvorrichtung versehen sind.

8. Transportwagen, insbesondere Putzwagen, Einkaufswagen oder Gepäckwagen,
**dadurch gekennzeichnet,**
**dass** er mit wenigstens einer Rollenvorrichtung nach einem der Ansprüche 1 bis 7 ausgestattet ist.

## Claims

1. A roller device for a trolley, comprising
- a device retainer (1),
- a support roller fork (4), which can be attached via the device retainer (1) to a lower region of a frame of the trolley,
- a support roller (6), which is pivoted in a support roller bearing (5) in the support roller fork (4) around a support roller axis that is substantially horizontal during the operation of the trolley,
- a follower roller (9) adjacent to the support roller (6), which follower roller is pivoted in a follower roller bearing (8) around a follower roller axis that is substantially horizontal during the operation of the trolley, it also being possible to attach the follower roller (9) via the device retainer (1) to a lower region of a frame of the trolley,
**characterised in that** the height of the follower roller bearing (8) and the diameter of the follower roller (9) are chosen such that a lower region of its running surface lies at the same height as a lower region of the running surface of the support roller (6).

2. A roller device according to Claim 1,
**characterised in that** the follower roller bearing (8) is formed in the support roller fork (4).

3. A roller device according to Claim 1,
**characterised in that** it comprises a follower fork (7) adjacent to the support roller fork (4) and in which the follower roller bearing (8) is formed.

4. A roller device according to Claim 3,
**characterised in that** the support roller (6) is a steering roller with a support roller fork (4) swivel-mounted relative to the frame of the trolley,
and **in that** the follower roller fork (7) is attached to the support roller fork (4).

5. A roller device according to Claim 3,
**characterised in that** the support roller (6) is a steering roller with a support roller fork (4) swivel-mounted relative to the frame of the trolley,
and **in that** the follower roller fork (7) is attached to a portion of the roller device that is fixed relative to the frame of the trolley.

6. A roller device according to Claim 5,
**characterised in that** the fixed portion of the roller device is a bearing shell (3) in which the support roller fork (4) is swivel-mounted.

7. A roller device according to one of the preceding Claims,
**characterised in that** the support roller (6) and/or the follower roller (9) are provided with an arresting device.

8. A trolley, in particular a cleaning trolley, shopping trolley or luggage trolley,
**characterised in that** it is equipped with at least one roller device according to one of Claims 1 to 7.

## Revendications

1. Dispositif à rouleaux pour chariot comprenant :
- un porte-appareil (1),
- une fourchette de rouleau d'appui (4) pouvant être fixée par le porte-appareils (1) sur une zone inférieure d'un châssis du chariot,
- un rouleau d'appui (6) placé en rotation dans un palier de rouleau d'appui (5) dans la fourchette de rouleau d'appui (4) autour d'un axe essentiellement horizontal pendant le fonctionnement du chariot,
- un rouleau suiveur (9) voisin du rouleau d'appui (6) et placé en rotation dans un palier de rouleau suiveur (8) autour d'un axe essentiellement horizontal pendant le fonctionnement du chariot, le rouleau de poursuite (9) pouvant également être fixé via le porte-appareil (1) sur une zone inférieure d'un châssis du chariot,
**caractérisé en ce que**
la hauteur du palier de rouleau suiveur (8) et le diamètre du rouleau suiveur (9) sont choisis pour qu'une zone inférieure de leur surface de roulement se trouve à la même hauteur qu'une zone inférieure de la surface de roulement du rouleau d'appui (6).

2. Dispositif à rouleaux selon la revendication 1,
**caractérisé en ce que**
le palier de rouleau suiveur (8) est formé dans la fourchette de rouleau d'appui (4).

3. Dispositif à rouleaux selon la revendication 1,
**caractérisé en ce qu'**
il comprend une fourchette de rouleau suiveur (7) voisine de la fourchette de rouleau d'appui (4) et dans laquelle est formé le palier de rouleau suiveur (8).

4. Dispositif à rouleaux selon la revendication 3,
**caractérisé en ce que**
le rouleau d'appui (6) est un galet directionnel avec une fourchette de rouleau d'appui (4) placée en pivotement par rapport au châssis du chariot, et la fourchette de rouleau suiveur (7) est fixée à la fourchette de rouleau d'appui (4).

5. Dispositif à rouleaux selon la revendication 3,
**caractérisé en ce que**
le rouleau d'appui (6) est un galet directionnel avec une fourchette de rouleau d'appui (4) placée en pivotement par rapport au châssis du chariot, et la fourchette de rouleau suiveur (7) est fixée à un segment rigide du dispositif à rouleaux par rapport au châssis du chariot.

6. Dispositif à rouleaux selon la revendication 5,
**caractérisé en ce que**
le segment rigide du dispositif à rouleaux est une coquille de coussinet (3) dans laquelle la fourchette de rouleau d'appui (4) peut être placée en pivotement.

7. Dispositif à rouleaux selon l'une quelconque des revendications précédentes,
**caractérisé en ce que**
le rouleau d'appui (6) et/ou le rouleau suiveur (9) sont pourvus d'un dispositif d'immobilisation.

8. Chariot, notamment chariot de nettoyage, caddy ou fourgon à bagages,
**caractérisé en ce qu'**
il est équipé d'au moins un dispositif à rouleaux suivant l'une quelconque des revendications 1 à 7.
